# EUROPÄISCHE PATENTANMELDUNG

(11) **EP 4 620 894 A1**
(43) Veröffentlichungstag der Anmeldung: **24.09.2025**
(21) Anmeldenummer: 25153735.3
(22) Anmeldetag: 24.01.2025
(51) Int. Cl.: B66F 9/075, B60N 3/06

(54) **FLURFÖRDERZEUG MIT EINEM FAHRERARBEITSPLATZ**

(30) Priorität: 18.03.2024 DE 102024107580; 20.03.2024 DE 102024107928
(71) Anmelder: STILL GmbH, 22113 Hamburg (DE)
(72) Erfinder: Kohl, Tobias, 22145 Hamburg (DE); Mundt, Hauke, 22119 Hamburg (DE)
(74) Vertreter: Patentship Patentanwaltgesellschaft

(57) **Zusammenfassung**

Die Erfindung betrifft ein Flurförderzeug (1) mit einem Fahrerarbeitsplatz (F), der einen Fahrersitz (5) und eine Bodenplatte (6) aufweist. Die Bodenplatte (6) ist um eine Neigeachse (15) in der Neigung verstellbar im Fahrerarbeitsplatz (F) angeordnet.

## Beschreibung

Die Erfindung betrifft ein Flurförderzeug mit einem Fahrerarbeitsplatz, der einen Fahrersitz und eine Bodenplatte aufweist.

Bei Flurförderzeugen, die als sogenanntes Sitzgerät ausgebildet sind und von einer Bedienperson im Sitzen bedient werden, ist ein Fahrerarbeitsplatz vorgesehen, der einen Fahrersitz und eine Bodenplatte aufweist, wobei eine auf dem Fahrersitz sitzende Bedienperson die Füße auf der Bodenplatte aufsetzt. Die Bodenplatte weist hierzu bevorzugt an der Oberseite eine Fußaufstellfläche auf. Die Fußaufstellfläche ist bevorzugt ausgebildet, dass eine auf dem Fahrersitz sitzende Bedienperson die Füße auf der Fußaufstellfläche aufstellen kann. An der Bodenplatte kann eine Pedaleinrichtung angeordnet sein, die mindestens ein Pedal umfasst. Das mindestens eine Pedal der Pedaleinrichtung kann von der auf dem Fahrersitz sitzenden Bedienperson mit einem oder beiden Füßen betätigt werden. Die Pedaleinrichtung kann hierbei als Einpedaleinrichtung mit einem einzelnen Fahrpedal, mit dem die Fahrgeschwindigkeit des Flurförderzeugs gesteuert werden kann, oder als Doppelpedaleinrichtung mit zwei Fahrpedalen ausgeführt sein, mit denen die Fahrgeschwindigkeit und die Fahrtrichtung des Flurförderzeugs gesteuert werden kann. Die Pedaleinrichtung kann weiterhin ein Bremspedal umfassen.

Bei derartigen, einen Fahrersitz und eine Bodenplatte, die mit einer Fußaufstellfläche und bevorzugt einer Pedaleinrichtung versehen ist, umfassenden Fahrerarbeitsplatz aufweisenden Flurförderzeugen ist es bekannt, die Bodenplatte starr und unverstellbar im Fahrerarbeitsplatz anzuordnen, so dass die Bedienperson durch Verstellen des Fahrersitzes, beispielsweise in der Höhe und in Sitzlängsrichtung des Fahrersitzes, eine Anpassung an ergonomische Erfordernisse vornehmen kann.

Bei derartigen, einen Fahrersitz und eine Bodenplatte, die mit einer Fußaufstellfläche und bevorzugt einer Pedaleinrichtung versehen ist, umfassenden Fahrerarbeitsplatz aufweisenden Flurförderzeugen ist es weiterhin bekannt, die Bodenplatte vertikal in der Höhe einstellbar im Fahrerarbeitsplatz anzuordnen, so dass die Bedienperson zusätzlich zu der Verstellung des Fahrersitzes durch die vertikale Höhenverstellung der Bodenplatte Anpassungen an ergonomische Erfordernisse vornehmen kann. Ein Flurförderzeug mit einem einen Fahrersitz und eine Bodenplatte mit einer Pedaleinrichtung umfassenden Fahrerarbeitsplatz, wobei die Bodenplatte vertikal in der Höhe einstellbar im Fahrerarbeitsplatz angeordnet ist, ist aus der DE 44 13 630 C2 bekannt. Bei der DE 44 13 630 C2 ist nachteilig, dass eine in vertikaler Richtung höhenverstellbare Bodenplatte aufgrund der erforderlichen Vertikalführungen der mit der Pedaleinrichtung versehenen Bodenplatte verhältnismäßig viel Bauraum im Flurförderzeug benötigt und einen hohen Bauaufwand aufweist.

Der vorliegenden Erfindung liegt die Aufgabe zugrunde, ein Flurförderzeug der eingangs genannten Gattung zur Verfügung zu stellen, das hinsichtlich der oben genannten Nachteile verbessert ist.

Diese Aufgabe wird erfindungsgemäß dadurch gelöst, dass die Bodenplatte um eine Neigeachse in der Neigung verstellbar im Fahrerarbeitsplatz angeordnet ist.

Erfindungsgemäß ist somit die mit der Fußaufstellfläche versehene Bodenplatte um eine Neigeachse in der Neigung verstellbar und somit einstellbar im Fahrerarbeitsplatz angeordnet. Dadurch kann die mit der Fußaufstellfläche versehene Bodenplatte im Anstellwinkel verändert und ausgerichtet werden. Eine um eine Neigeachse in der Neigung verstellbar angeordnete Bodenplatte benötigt gegenüber einer in vertikaler Richtung höhenverstellbaren Bodenplatte keine Vertikalführungen, wodurch eine um eine Neigeachse in der Neigung verstellbar angeordnete Bodenplatte einen einfachen Aufbau mit geringem Bauraumbedarf und geringem Bauaufwand aufweist. Bevorzugt ist die Neigeachse von einem einfach aufgebauten Scharnier gebildet, das an der Bodenplatte und an dem Fahrerarbeitsplatz befestigt ist. Mit einer um eine Neigeachse in der Neigung verstellbaren und somit im Anstellwinkel ausrichtbaren Bodenplatte kann für unterschiedlich große Bedienpersonen somit bei geringem Bauraumbedarf und geringem Bauaufwand eine Anpassung der an der Bodenplatte ausgebildeten Fußaufstellfläche an ergonomische Anforderungen und eine ergonomische Arbeitsposition erzielt werden. Insbesondere wenn der Fahrersitz in der Höhe wenig Einstellmöglichkeiten bietet, kann mit einer in der Neigung einstellbaren und verstellbaren, Bodenplatte für unterschiedlich große Bedienpersonen in einfacher Weise eine Anpassung an ergonomische Anforderungen und eine ergonomische Arbeitsposition erzielt werden.

Gemäß einer vorteilhaften Ausgestaltungsform der Erfindung ist an der Bodenplatte eine Pedaleinrichtung angeordnet, die mindestens ein Pedal umfasst. Mit einer um eine Neigeachse in der Neigung verstellbaren und somit im Anstellwinkel ausrichtbaren Bodenplatte kann für unterschiedlich große Bedienpersonen somit bei geringem Bauraumbedarf und geringem Bauaufwand eine Anpassung der an der Bodenplatte angeordneten Pedaleinrichtung und somit der Pedalstellung der Fahrpedaleinrichtung an ergonomische Anforderungen und eine ergonomische Arbeitsposition erzielt werden. Insbesondere wenn der Fahrersitz in der Höhe wenig Einstellmöglichkeiten bietet, kann mit einer in der Neigung einstellbaren und verstellbaren, mit der Pedaleinrichtung versehenen Bodenplatte für unterschiedlich große Bedienpersonen in einfacher Weise eine Anpassung an ergonomische Anforderungen und eine ergonomische Arbeitsposition erzielt werden.

Gemäß einer vorteilhaften Ausgestaltungsform der Erfindung weist die Bodenplatte eine vorderen, vom Fahrersitz abgewandten, Endbereich und eine hinteren, dem Fahrersitz zugewandten, Endbereich auf und ist die Neigeachse in dem hinteren, dem Fahrersitz zugewandten, Endbereich der Bodenplatte angeordnet. Bevorzugt ist die Neigeachse der Bodenplatte senkrecht zu einer Sitzlängsrichtung des Fahrersitzes angeordnet. Hierdurch kann in einfacher Weise die mit der Fußaufstellfläche und/oder mit der Pedaleinrichtung versehene Bodenplatte in der Neigung verstellt und im Anstellwinkel zum Fahrersitz verändert werden.

Gemäß einer vorteilhaften Ausgestaltungsform der Erfindung ist die Pedaleinrichtung in dem vorderen, vom Fahrersitz abgewandten, Endbereich der Bodenplatte angeordnet. Hierdurch kann mit der um die Neigeachse in der Neigung verstellbaren und somit im Anstellwinkel ausrichtbaren Bodenplatte für unterschiedlich große Bedienpersonen bei geringem Bauraumbedarf und geringem Bauaufwand eine Anpassung der an der Bodenplatte angeordneten Pedaleinrichtung und somit der Pedalstellung der Fahrpedaleinrichtung an ergonomische Anforderungen und eine ergonomische Arbeitsposition erzielt werden.

Gemäß einer vorteilhaften Ausgestaltungsform der Erfindung ist die Bodenplatte in einem Neigewinkel um die Neigeachse stufenlos oder rastend verstellbar angeordnet. Mit einer stufenlosen Verstellung oder einer rastenden Verstellung kann eine Bedienperson in einfacher Weise die Bodenplatte in der Neigung an ergonomische Anforderungen anpassen und einstellen.

Gemäß einer vorteilhaften Ausgestaltungsform der Erfindung ist ein die Bodenplatte um die Neigeachse verstellender Stellantrieb, insbesondere ein elektrischer Stellantrieb, vorgesehen. Mit einem Stellantrieb, beispielsweise einem elektrischen Stellantrieb, kann ein hoher Komfort bei der Verstellung der Neigung der mit der Fußaufstellfläche und/oder der Pedaleinrichtung versehenen Bodenplatte erzielt werden.

Gemäß einer vorteilhaften Ausgestaltungsform der Erfindung ist die Bodenplatte von einer Federeinrichtung in eine obere Neigestellung beaufschlagt. Hierdurch wird ein einfacher Bauaufwand der in der Neigung verstellbaren Bodenplatte erzielt, da die Bodenplatte von der Federeinrichtung in eine obere Neigestellung vorgespannt ist und zur Anpassung an ergonomische Erfordernisse von der Bedienperson mit den auf der Bodenplatte aufgesetzten Füßen entgegen der Kraft der Federeinrichtung um die Neigeachse nach unten verschwenkt werden kann.

Gemäß einer vorteilhaften Ausgestaltungsform der Erfindung ist die Federeinrichtung als Druckfeder, insbesondere Gasdruckfeder, ausgebildet. Mit einer Druckfeder, beispielsweise einer Gasdruckfeder, kann mit geringem Bauaufwand eine Beaufschlagung der Bodenplatte in die obere Neigestellung erzielt werden.

Gemäß einer vorteilhaften Ausgestaltungsform der Erfindung ist eine die Bodenplatte in der Neigung fixierende Feststelleinrichtung vorgesehen. Mit einer Feststelleinrichtung kann eine von einer Federeinrichtung um die Neigeachse nach oben beaufschlagte Bodenplatte in einfacher Weise in der gewünschten, für die Bedienperson ergonomisch günstigen Neigestellung arretiert werden.

Gemäß einer vorteilhaften Ausgestaltungsform der Erfindung ist die Feststelleinrichtung als Rastvorrichtung ausgebildet. Mit einer Rastvorrichtung kann bei geringem Bauaufwand eine in der Neigung rastend verstellbare Bodenplatte in der gewünschten, für die Bedienperson ergonomisch günstigen Neigestellung arretiert werden.

Gemäß einer vorteilhaften Ausgestaltungsform der Erfindung weist die Rastvorrichtung mindestens zwei an der Bodenplatte angeordnete Rastausnehmungen und ein mit den Rastausnehmungen in Wirkverbindung bringbares Rastelement auf. Mit einer Rastvorrichtung, die mindestens zwei an der Bodenplatte angeordnete Rastausnehmungen und ein mit den Rastausnehmungen in Wirkverbindung bringbares Rastelement aufweist, kann mit geringem Bauaufwand eine die Bodenplatte in der Neigung arretierende Rastvorrichtung gebildet werden.

Gemäß einer vorteilhaften Ausgestaltungsform der Erfindung ist das Rastelement an einem im Fahrerarbeitsplatz angeordneten Betätigungshebel angeordnet. Dadurch kann das Rastelement über den Betätigungshebel in einfacher Weise von der auf dem Fahrersitz sitzenden Bedienperson betätigt werden, beispielsweise mit einer Hand oder einem Fuß.

Gemäß einer vorteilhaften Ausgestaltungsform der Erfindung ist der Betätigungshebel um eine Schwenkachse zwischen einer Lösestellung und einer Feststellstellung verstellbar im Fahrerarbeitsplatz angeordnet. Bevorzugt steht in der Feststellstellung des Betätigungshebel das Rastelement mit der Rastausnehmung in Eingriff, so dass die Bodenplatte in der Neigung arretiert ist. In der Lösestellung ist bevorzugt das Rastelement außer Eingriff mit der Rastausnehmung, so dass die Bodenplatte um die Neigeachse verschwenkt und in der Neigung verstellt werden kann.

Hinsichtlich einer einfachen Bedienung und einer hohen Funktionssicherheit ist gemäß einer vorteilhaften Ausgestaltungsform der Erfindung der Betätigungshebel mittels einer Federeinrichtung in die Feststellstellung beaufschlagt.

Gemäß einer vorteilhaften Ausgestaltungsform der Erfindung ist die Schwenkachse des Betätigungshebels parallel zur Neigeachse der Bodenplatte angeordnet. Dies ermöglicht eine einfache und sinnfällige Betätigung des Betätigungshebels durch eine auf dem Fahrersitz sitzende Bedienperson zwischen der Lösestellung und einer Feststellstellung.

Gemäß einer vorteilhaften Ausgestaltungsform der Erfindung ist zwischen der Bodenplatte und dem Fahrerarbeitsplatz ein die obere Neigestellung festlegender Anschlag ausgebildet. Dies ermöglicht die einfache Ausbildung einer oberen Neigeendstellung der mit der Pedaleinrichtung versehenen Bodenplatte.

Gemäß einer vorteilhaften Ausgestaltungsform der Erfindung ist an der Bodenpatte eine Totmannschaltereinrichtung und/oder ein Bedienelement einer Hupeneinrichtung angeordnet. Die Totmannschaltereinrichtung und/oder das Bedienelement der Hupeneinrichtung kann hierdurch in einfacher Weise von der auf dem Fahrersitz sitzenden Bedienperson mit einem Fuß betätigt werden.

Gemäß einer vorteilhaften Ausgestaltungsform der Erfindung ist das Flurförderzeug als Gegengewichtsgabelstapler oder als Schubmaststapler ausgebildet ist.

Weitere Vorteile und Einzelheiten der Erfindung werden anhand des in den schematischen Figuren dargestellten Ausführungsbeispiels näher erläutert. Hierbei zeigt
- Figur 1: ein erfindungsgemäßes Flurförderzeug in einer Ansicht auf den Fahrerarbeitsplatz,
- Figur 2: einen Ausschnitt der Figur 1 in einer vergrößerten Darstellung,
- Figur 3a: die Bodenplatte der Figur 2 in einer ersten Neigestellung,
- Figur 3b: die Bodenplatte der Figur 2 in einer zweiten Neigestellung,
- Figur 3c: die Bodenplatte der Figur 2 in einer dritten Neigestellung,
- Figur 4: die Bodenplatte der Figuren 1 bis 3c mit einer Darstellung der Verstellung der Neigung,
- Figur 5: die Bodenplatte der Figuren 1 bis 3c mit einer Darstellung der Verstellung der Neigung und
- Figur 6: eine perspektivische Darstellung der erfindungsgemäßen in der Neigung verstellbaren Bodenplatte.

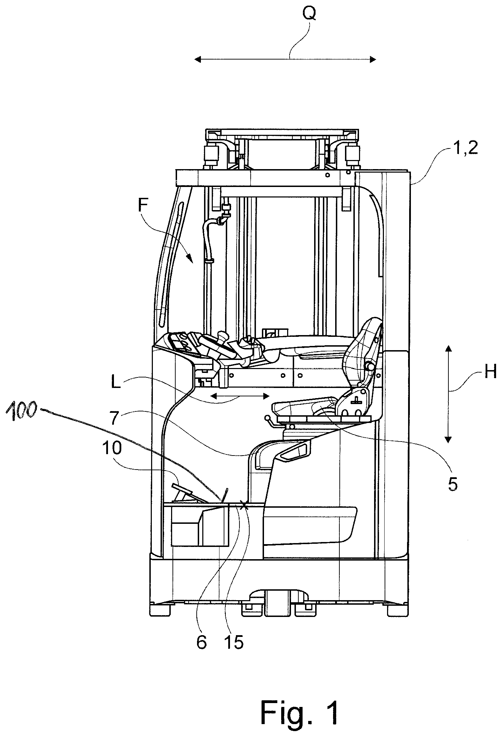

In der Figur 1 ist ein erfindungsgemäßes Flurförderzeug 1 in einer Ansicht auf einen Fahrerarbeitspatz F dargestellt.

Im dargestellten Ausführungsbeispiel ist das Flurförderzeug 1 als Schubmaststapler 2 ausgebildet.

Der Fahrerarbeitsplatz F weist einen Fahrersitz 5 und eine Bodenplatte 6 auf. Der Fahrersitz 5 ist auf einer haubenartigen Abdeckung 7 angeordnet. Der Fahrersitz 5 kann an der Abdeckung 7 - wie in der Figur 1 anhand des Pfeiles H verdeutlicht ist - in vertikaler Richtung H höhenverstellbar angeordnet sein und/oder - wie in der Figur 1 anhand des Pfeiles L verdeutlicht ist - in Sitzlängsrichtung L verstellbar angeordnet sein. In dem dargestellten Ausführungsbeispiel eines Schubmaststaplers 2 ist die Sitzlängsrichtung L des Fahrersitzes 5 in Fahrzeugquerrichtung Q des Schubmaststaplers 2 angeordnet.

Die Bodenplatte 6 ist - in Sitzlängsrichtung L gesehen - vor dem Fahrersitz 5 angeordnet.

Eine auf dem Fahrersitz 5 sitzende Bedienperson kann die Füße auf der Bodenplatte 6 aufsetzen bzw. aufstellen. Die Bodenplatte 6 weist hierzu an der Oberseite eine Fußaufstellfläche 100 auf. Die Fußaufstellfläche 100 ist bevorzugt ausgebildet, dass eine auf dem Fahrersitz 5 sitzende Bedienperson die Füße auf der Fußaufstellfläche 100 aufstellen kann.

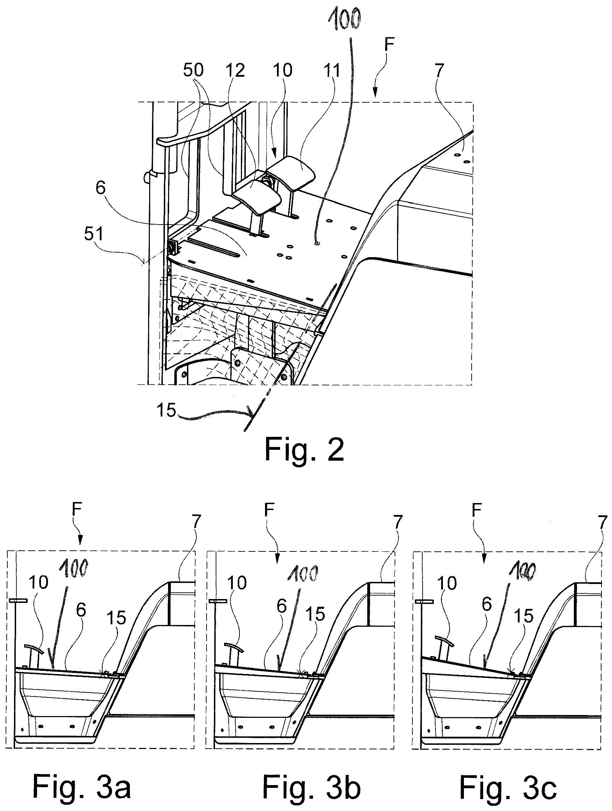

Im dargestellten Ausführungsbeispiel ist an der Bodenplatte 6 - wie in Verbindung mit der Figur 2 näher dargestellt ist - weiterhin eine Pedaleinrichtung 10 angeordnet.

Die Pedaleinrichtung 10 weist im dargestellten Ausführungsbeispiel ein Fahrpedal 11 und ein Bremspedal 12 auf. Das Fahrpedal 11 und das Bremspedal 12 kann von einer auf dem Fahrersitz 5 sitzenden Bedienperson mit den beiden Füßen betätigt und relativ zur Bodenplatte 6 nach unten gedrückt werden.

Die Pedaleinrichtung 10 ist an der Bodenplatte 6 nicht einstellbar angeordnet. Unter einer derartigen Anordnung ist zu verstehen, dass abgesehen von der

Betätigungsbewegung des Fahrpedals 11 und des Bremspedals 12 die beiden Pedale 11, 12 keine Einstellmöglichkeit bzw. Verstellmöglichkeit relativ zur Bodenplatte 6 aufweisen.

Die Bodenplatte 6 ist um eine Neigeachse 15 in der Neigung verstellbar im Fahrerarbeitsplatz F angeordnet.

Die Pedaleinrichtung 10 ist in einem vorderen, vom Fahrersitz 5 abgewandten, Endbereich der Bodenplatte 6 angeordnet. Die Neigeachse 15 ist in einem hinteren, dem Fahrersitz 5 zugewandten, Endbereich der Bodenplatte 6 angeordnet. Die Neigeachse 15 ist als horizontal angeordnete Neigeachse ausgebildet, die senkrecht zu der Sitzlängsrichtung L des Fahrersitzes 5 angeordnet ist.

Die Bodenplatte 6 kann in einem Neigewinkel um die Neigeachse 15 stufenlos oder rastend verstellbar am Fahrerarbeitsplatz F angeordnet sein. Im dargestellten Ausführungsbeispiel ist die Bodenplatte 6 in dem Neigewinkel um die Neigeachse 15 rastend verstellbar und somit einstellbar am Fahrerarbeitsplatz F angeordnet.

In der Figur 3a ist die Bodenplatte 6 in einer unteren Neigestellung dargestellt. Die Figur 3c zeigt die Bodenplatte 6 in einer oberen Neigestellung. In der Figur 3b ist die Bodenplatte 6 in einer mittleren Neigestellung dargestellt. Durch das Verstellen der Bodenplatte um die Neigeachse 15 kann - wie in den Figuren 3a bis 3c ersichtlich ist - der Anstellwinkel der Bodenplatte 6 und somit der Anstellwinkel der Fußaufstellfläche 100 und/oder der Pedaleinrichtung 10 zu dem Fahrersitz 5 verändert werden.

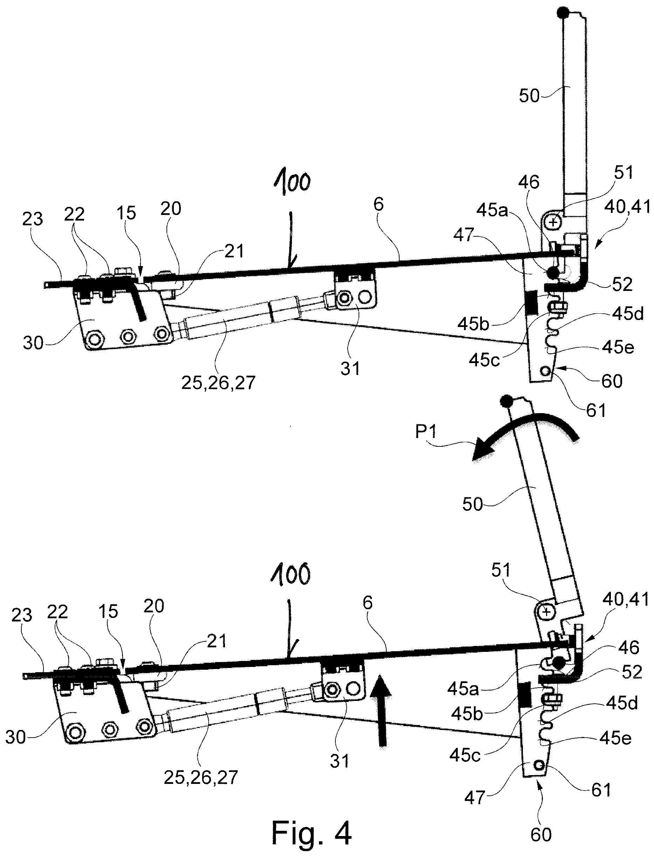

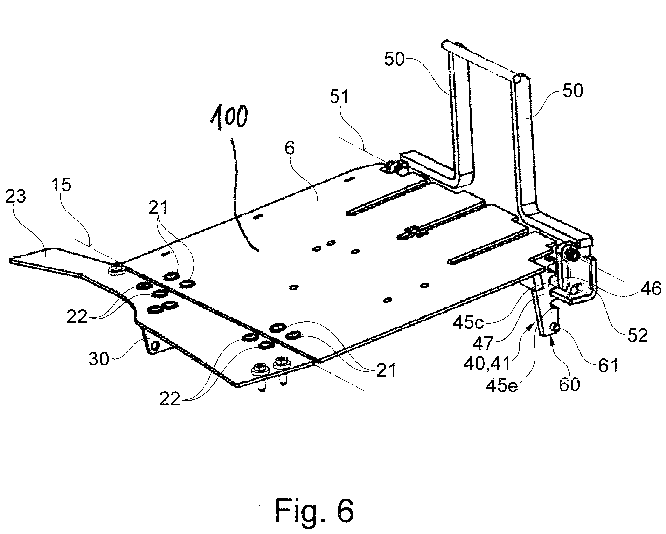

Der Aufbau der in der Neigung um die Neigeachse 15 verstellbar angeordneten Bodenplatte 6 ist im Folgenden anhand der Figuren 4 bis 6 verdeutlicht.

Die Bodenplatte 6 ist bevorzugt mittels die Neigeachse 15 bildenden Scharnieren 20 am Fahrerarbeitsplatz F befestigt. Die Scharniere 20 sind hierzu beispielsweise mittels Befestigungsschrauben 21 an der Bodenplatte 6 und mittels Befestigungsschrauben 22 an einem fahrzeugfesten Konsolenbauteil 23 des Fahrerarbeitsplatzes F befestigt.

Die Bodenplatte 6 ist von einer Federeinrichtung 25 in die obere Neigestellung beaufschlagt. Im dargestellten Ausführungsbeispiel ist die Federeinrichtung 25 als Druckfeder 26, beispielsweise Gasdruckfeder 27, ausgebildet.

Die Federeinrichtung 25 ist im dargestellten Ausführungsbeispiel in vertikaler Richtung unterhalb der Bodenplatte 6 angeordnet. Die Federeinrichtung 25 ist an einem ersten Ende an einem an dem Konsolenbauteil 23 angeordneten Befestigungselement 30, beispielswiese einer Flanschplatte, abgestützt und an einem zweiten Ende mit einem an der Unterseite der Bodenplatte 6 angeordneten Befestigungselement 31, beispielsweise einer Flanschplatte, verbunden.

Für die Arretierung der Bodenplatte 6 im Neigewinkel um die Neigeachse 15 ist eine die Bodenplatte 6 in der Neigung fixierende Feststelleinrichtung 40 vorgesehen.

Die Feststelleinrichtung 40 ist im dargestellten Ausführungsbeispiel als Rastvorrichtung 41 ausgebildet ist.

Die Rastvorrichtung 41 weist mindestens zwei an der Bodenplatte 6 angeordnete Rastausnehmungen 45a, 45b, 45c, 45d, 45e auf und ein mit den Rastausnehmungen 45a, 45b, 45c, 45d, 45e in Wirkverbindung und in Eingriff bringbares Rastelement 46.

Die Rastausnehmungen 45a, 45b, 45c, 45d, 45e sind im dargestellten Ausführungsbeispiel als langlochartige Aussparungen ausgeführt, in die ein als Stift oder Bolzen ausgebildetes Rastelement 46 in Eingriff gebracht werden kann.

Die Rastausnehmungen 45a, 45b, 45c, 45d, 45e sind im dargestellten Ausführungsbeispiel in einer an der Unterseite der Bodenplatte 6 angeordneten Platte 47 ausgebildet.

Das Rastelement 46 ist im dargestellten Ausführungsbeispiel an einem im Fahrerarbeitsplatz F angeordneten Betätigungshebel 50 angeordnet.

Die Rastausnehmungen 45a, 45b, 45c, 45d, 45e definieren jeweils einen unterschiedlichen Neigewinkel der Bodenplatte 6 um die Neigeachse 15 und somit unterschiedliche Anstellwinkel der mit der Pedaleinrichtung 10 versehenen Bodenplatte 6.

Im dargestellten Ausführungsbeispiel ist der Betätigungshebel 50 um eine Schwenkachse 51 zwischen einer Lösestellung und einer Feststellstellung verstellbar im Fahrerarbeitsplatz F angeordnet. Der Betätigungshebel 50 ist hierzu angrenzend an den vorderen, vom Fahrersitz 6 abgewandten, Endbereich der Bodenplatte 6 an einem fahrzeugfesten Konsolenbauteil 52 des Fahrerarbeitsplatzes F um die Schwenkachse 51 verschwenkbar angeordnet. Die Schwenkachse 51 des Betätigungshebels 50 ist im dargestellten Ausführungsbeispiel parallel zur Neigeachse 15 der Bodenplatte 15 angeordnet.

Zwischen der Bodenplatte 6 und dem Fahrerarbeitsplatz F ist im dargestellten Ausführungsbeispiel ein die obere Neigestellung festlegender Anschlag 60 ausgebildet. Der Anschlag 60 ist im dargestellten Ausführungsbeispiel als ein an der Platte 47 angeordneter Anschlagstift 61 ausgebildet, der beim Verschwenken der Bodenplatte 6 um die Neigeachse 15 nach oben an dem Konsolenbauteil 52 des Fahrerarbeitsplatzes F anschlägt und dadurch die obere Neigestellung der Bodenplatte 6 begrenzt.

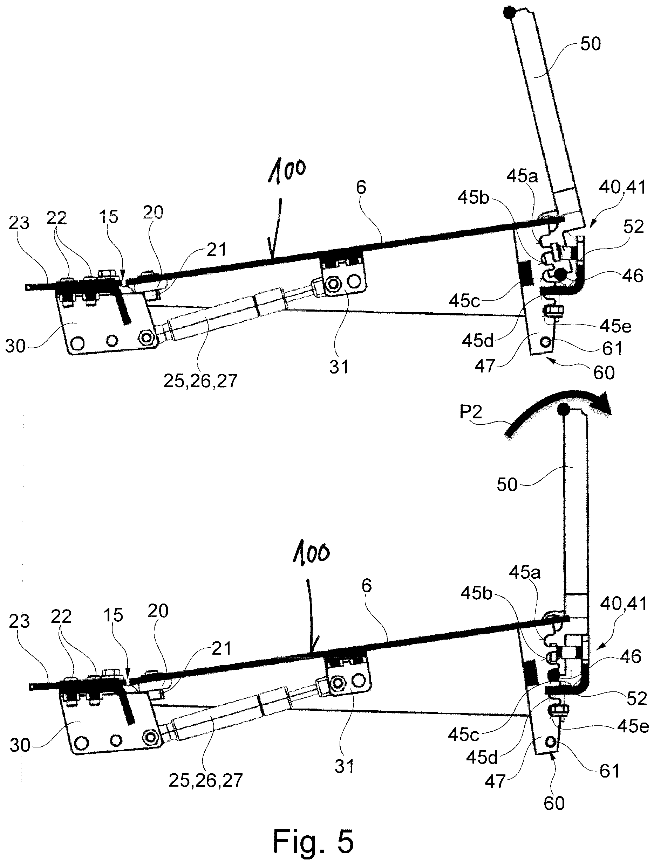

Die Funktion der erfindungsgemäßen Bodenplatte 6 wird anhand der Figuren 4 und 5 verdeutlicht.

In der oberen Darstellung der Figur 4 befindet sich die Bodenplatte 6 in der unteren Neigestellung, wobei sich der Betätigungshebel 50 in der Feststellstellung befindet und der Betätigungshebel 50 mit dem Rastelement 46 mit der obersten Rastausnehmung 45a der Bodenplatte 6 in Eingriff steht.

Durch Verschwenken des Betätigungshebels 50 um die Schwenkachse 51 gemäß dem Pfeil P1 in der unteren Darstellung der Figur 4, wird der Betätigungshebel 50 in die Lösestellung betätigt, in der das Rastelement 46 des Betätigungshebels 50 außer Eingriff mit der entsprechenden Rastausnehmung 45a bis 45e der Bodenplatte 6 ist.

In der Lösestellung des Betätigungshebels 50 wird die Bodenplatte 6 - wie in der oberen Darstellung der Figur 5 ersichtlich ist - von der Federeinrichtung 25 um die Neigeachse 15 nach oben verschwenkt und beaufschlagt. Sofern eine passende Neigestellung der Bodenplatte 6 erreicht ist, kann durch Verschwenken des Betätigungshebels 50 um die Schwenkachse 51 gemäß dem Pfeil P2 in der unteren Darstellung der Figur 5, der Betätigungshebel 50 zurück in die Feststellstellung betätigt werden, in der das Rastelement 46 des Betätigungshebels 50 in Eingriff mit einer entsprechenden Rastausnehmung 45b-45e der Bodenplatte 6 gelangt. Im dargestellten Ausführungsbeispiel gelangt der Betätigungshebel 50 durch Zurückschwenken in die Feststellstellung mit der mittleren Rastausnehmung 45c der Bodenplatte 6 in Eingriff, wodurch die Bodenplatte 6 in dem durch die Rastausnehmung 45c definierten Neigewinkel um die Neigeachse 15 fixiert wird.

## Patentansprüche

1. Flurförderzeug (1) mit einem Fahrerarbeitsplatz (F), der einen Fahrersitz (5) und eine Bodenplatte (6) aufweist, **dadurch gekennzeichnet, dass** die Bodenplatte (6) um eine Neigeachse (15) in der Neigung verstellbar im Fahrerarbeitsplatz (F) angeordnet ist.

2. Flurförderzeug nach Anspruch 1, **dadurch gekennzeichnet, dass** an der Bodenplatte (6) eine Pedaleinrichtung (10) angeordnet ist, die mindestens ein Pedal (11; 12) umfasst.

3. Flurförderzeug nach Anspruch 1 oder 2, **dadurch gekennzeichnet, dass** die Bodenplatte (6) einen vorderen, vom Fahrersitz (5) abgewandten, Endbereich und einen hinteren, dem Fahrersitz (5) zugewandten, Endbereich aufweist, wobei die Neigeachse (15) in dem hinteren, dem Fahrersitz (5) zugewandten, Endbereich der Bodenplatte (6) angeordnet ist.

4. Flurförderzeug nach Anspruch 3, **dadurch gekennzeichnet, dass** die Pedaleinrichtung (10) in dem vorderen, vom Fahrersitz (5) abgewandten, Endbereich der Bodenplatte (6) angeordnet ist.

5. Flurförderzeug nach einem der Ansprüche 1 bis 4, **dadurch gekennzeichnet, dass** die Bodenplatte (6) in einem Neigewinkel um die Neigeachse (15) stufenlos oder rastend verstellbar angeordnet ist.

6. Flurförderzeug nach einem der Ansprüche 1 bis 5, **dadurch gekennzeichnet, dass** ein die Bodenplatte (6) um die Neigeachse (15) verstellender Stellantrieb, insbesondere ein elektrischer Stellantrieb, vorgesehen ist.

7. Flurförderzeug nach einem der Ansprüche 1 bis 6, **dadurch gekennzeichnet, dass** die Bodenplatte (6) von einer Federeinrichtung (25) in eine obere Neigestellung beaufschlagt ist.

8. Flurförderzeug nach Anspruch 7, **dadurch gekennzeichnet, dass** die Federeinrichtung (25) als Druckfeder (26), insbesondere Gasdruckfeder (27), ausgebildet ist.

9. Flurförderzeug nach einem der Ansprüche 1 bis 8, **dadurch gekennzeichnet, dass** eine die Bodenplatte (6) in der Neigung fixierende Feststelleinrichtung (40) vorgesehen ist.

10. Flurförderzeug nach Anspruch 9, **dadurch gekennzeichnet, dass** die Feststelleinrichtung (40) als Rastvorrichtung (41) ausgebildet ist.

11. Flurförderzeug nach Anspruch 10, **dadurch gekennzeichnet, dass** die Rastvorrichtung (41) mindestens zwei an der Bodenplatte (8) angeordnete Rastausnehmungen (45a, 45b, 45c, 45d, 45e) und ein mit den Rastausnehmungen (45a, 45b, 45c, 45d, 45e) in Wirkverbindung bringbares Rastelement (46) aufweist.

12. Flurförderzeug nach Anspruch 11, **dadurch gekennzeichnet, dass** das Rastelement (46) an einem im Fahrerarbeitsplatz (F) angeordneten Betätigungshebel (50) angeordnet ist.

13. Flurförderzeug nach Anspruch 12, **dadurch gekennzeichnet, dass** der Betätigungshebel (50) um eine Schwenkachse (51) zwischen einer Lösestellung und einer Feststellstellung verstellbar im Fahrerarbeitsplatz (F) angeordnet ist.

14. Flurförderzeug nach Anspruch 13, **dadurch gekennzeichnet, dass** die Schwenkachse (51) des Betätigungshebels (50) parallel zur Neigeachse (15) der Bodenplatte (6) angeordnet ist.

15. Flurförderzeug nach einem der Ansprüche 1 bis 14, **dadurch gekennzeichnet, dass** zwischen der Bodenplatte (6) und dem Fahrerarbeitsplatz (F) ein die obere Neigestellung festlegender Anschlag (60) ausgebildet ist.

16. Flurförderzeug nach einem der Ansprüche 1 bis 15, **dadurch gekennzeichnet, dass** an der Bodenpatte (6) eine Totmannschaltereinrichtung und/oder ein Bedienelement einer Hupeneinrichtung angeordnet ist.

17. Flurförderzeug nach einem der Ansprüche 1 bis 16, **dadurch gekennzeichnet, dass** das Flurförderzeug (1) als Gegengewichtsgabelstapler oder als Schubmaststapler (2) ausgebildet ist.
